# EUROPÄISCHE PATENTANMELDUNG

(11) **EP 4 375 530 A1**
(43) Veröffentlichungstag der Anmeldung: **29.05.2024**
(21) Anmeldenummer: 22208915.3
(22) Anmeldetag: 22.11.2022
(51) Int. Cl.: F16D 49/00, F16D 63/00, F16D 65/092, F16D 65/28, H02K 49/04, F16D 121/24, F16D 125/64, F16D 125/40, F16D 125/28

(54) **BREMSVORRICHTUNG UND SCHIENENFAHRZEUG**

(71) Anmelder: Schweizerische Bundesbahnen SBB, 3000 Bern (CH)
(72) Erfinder: von Arx, Raphael, 3000 Bern (CH); Bahr, Michael, 80339 München (DE); Schneider, Thomas, 4434 Hölstein (CH)
(74) Vertreter: Rutz & Partner

(57) **Zusammenfassung**

Die Bremsvorrichtung (1), die zur Ausrüstung eines Rads (9) eines Schienenfahrzeugs vorgesehen ist, umfasst wenigstens einen Wirbelstromstator (21A; 21B), der als Permanentmagnet ausgebildet ist oder wenigstens einen Permanentmagnet (219) umfasst, und einen mit dem Rad (9) verbundenen Wirbelstromrotor (22A; 22B), die mittels einer mechanischen Betätigungsvorrichtung gegeneinander führbar sind, und wenigstens eine Reibungsbremse (3A; 3B), die einen Reibungsstator (31A; 31B) und einen mit dem Rad (9) verbundenen Reibungsrotor (32A; 32B) aufweist, die mittels einer mechanischen Betätigungsvorrichtung gegeneinander führbar sind. Erfindungsgemäss ist vorgesehen, dass die Wirbelstrombremse (2A; 2B) und die Reibungsbremse (3A; 3B) von einer einzigen Betätigungsvorrichtung (7) und einer damit gekoppelten Antriebsvorrichtung (8), die mittels einer Steuereinheit (10) steuerbar ist, sequenziell aktivierbar sind.

## Beschreibung

Die Erfindung betrifft eine Bremsvorrichtung für Schienenfahrzeuge, die eine Wirbelstromscheibenbremse und eine Reibungsscheibenbremse umfasst, sowie ein Schienenfahrzeug, insbesondere ein Drehgestell, mit wenigstens einer solchen Bremsvorrichtung.

Die EP2598766A1 offenbart eine Bremsvorrichtung für Schienenfahrzeuge mit einer Wirbelstromscheibenbremse und einer Reibungsscheibenbremse. Die Wirbelstromscheibenbremse umfasst einen rotierenden Rotor, der eine Wirbelstrombahn umfasst, und einen drehfesten Stator, der einen Elektromagneten trägt, dessen magnetische Feldlinien bei einer Bewegung des Rotors in der Wirbelstrombahn Wirbelströme induzieren, die ein Wirbelstrom-Bremsmoment erzeugen. Die Reibungsscheibenbremse umfasst einen als Bremsscheibe wirkenden Rotor und Bremsbeläge, die als Stator mit der Bremsscheibe zusammenwirken, um ein Reibungs-Bremsmoment zu erzeugen. Die Wirbelstromscheibenbremse und die Reibungsscheibenbremse benutzen denselben Rotor, der einerseits als Wirbelstromrotor mit der Wirbelstrombahn und andererseits als Reibungsbremsscheibe dient.

Die Bremsvorrichtung wird von einer Steuereinheit in Abhängigkeit von Betriebsparametern des Schienenfahrzeugs angesteuert, welche die jeweilige Bremsanforderung des Schienenfahrzeugs beinhalten, die normalerweise abhängig von der Geschwindigkeit ist.

Wirbelstromscheibenbremse entfaltet bei hohen Geschwindigkeiten des Schienenfahrzeugs und somit bei einer hohen Rotationsgeschwindigkeit des Rotors eine gute Bremswirkung, ohne dass Verschleisserscheinungen auftreten. Bei tiefen Geschwindigkeiten reduziert sich die Bremswirkung der Wirbelstromscheibenbremse, weshalb die Reibungsscheibenbremse aktiviert wird, um das Schienenfahrzeug anzuhalten. Da die Reibungsscheibenbremse normalerweise nur bei tiefen Geschwindigkeiten eingesetzt wird, treten entsprechend geringe Verschleisserscheinungen auf.

Die EP2598766A1 zeigt in einer schematisierten Darstellung, dass die Wirbelstromscheibenbremse mit dem Elektromagneten und die Reibungsscheibenbremse voneinander getrennt an ein Rad angekoppelt sind, weshalb entsprechend viel Raum in Anspruch genommen wird. Die Wirbelstromscheibenbremse kann einfach aktiviert werden, indem der Elektromagnet mit Strom beaufschlagt wird. Bewegte Teile und mechanische Aktuatoren sind bei der Wirbelstromscheibenbremse nicht vorgesehen. Sofern die Wirbelstromscheibenbremse anstelle eines Elektromagneten einen Permanentmagneten aufweist, so ist dieser zur Einleitung des Bremsvorgangs mittels einer Betätigungsvorrichtung gegen die Wirbelstrombahn zu führen. Bei der Realisierung einer Bremsvorrichtung mit einer Wirbelstromscheibenbremse und einer Reibungsscheibenbremse, die beide eine mechanische Betätigungsvorrichtung aufweisen, resultiert somit ein zusätzlich erhöhter Raumbedarf und ein erhöhter Herstellungsaufwand zur Realisierung der Bremsvorrichtung.

Der vorliegenden Erfindung liegt daher die Aufgabe zugrunde, eine verbesserte Bremsvorrichtung für ein Schienenfahrzeug zu schaffen, die eine Wirbelstrombremse mit wenigstens einem Permanentmagneten und eine Reibungsbremse aufweist. Ferner ist ein Schienenfahrzeug, insbesondere ein Drehgestell, mit einer solchen Bremsvorrichtung zu realisieren.

Trotz des Verzichts auf einen Elektromagneten und die Verwendung wenigstens eines Elektromagneten, soll die Bremsvorrichtung noch kompakter aufgebaut sein als die einleitend beschriebene Bremsvorrichtung, sodass sie weniger Raum in Anspruch nimmt und vorteilhaft in ein Schienenfahrzeug, insbesondere in ein Drehgestell, integriert werden kann.

Die Erfindung soll es zudem erlauben, eine erhöhte Bremswirkung auf ein Rad eines Schienenfahrzeugs zu übertragen.

Die Bremsvorrichtung soll einfach aufgebaut sein und nur wenige Teile umfassen, sodass ein geringer Herstellungsaufwand und ein geringer Wartungsaufwand resultieren.

Die Elemente der Bremsvorrichtung sollen vorteilhaft zugänglich und leicht voneinander lösbar sein, sodass auch diesbezüglich ein geringer Aufwand bei Wartung und Reparaturarbeiten resultiert.

Dabei soll die Bremsvorrichtung in jedem Geschwindigkeitsbereich des Schienenfahrzeugs eine optimale Bremswirkung entfalten. Verschleisserscheinungen an der Reibungsbremse sollen im Normalbetrieb der Bremsvorrichtung auf ein Minimum reduziert werden. Sofern die Bremsvorrichtung inaktiv ist, soll hingegen keine Bremswirkung auftreten.

Diese Aufgabe wird mit einer Bremsvorrichtung gemäss Anspruch 1 und einem Schienenfahrzeug, insbesondere einem Drehgestell, gemäss Anspruch 15 gelöst. Vorteilhafte Ausgestaltungen der Erfindung sind in weiteren Ansprüchen angegeben.

Die Bremsvorrichtung, die zur Ausrüstung eines Rads eines Schienenfahrzeugs vorgesehen ist, umfasst wenigstens einen Wirbelstromstator, der als Permanentmagnet ausgebildet ist oder wenigstens einen Permanentmagnet umfasst, und einen mit dem Rad verbundenen Wirbelstromrotor, die mittels einer mechanischen Betätigungsvorrichtung gegeneinander führbar sind, und wenigstens eine Reibungsbremse, die einen Reibungsstator und einen mit dem Rad verbundenen Reibungsrotor aufweist, die mittels einer mechanischen Betätigungsvorrichtung gegeneinander führbar sind.

Erfindungsgemäss ist vorgesehen, dass die Wirbelstrombremse und die Reibungsbremse von einer einzigen Betätigungsvorrichtung und einer damit gekoppelten Antriebsvorrichtung, die mittels einer Steuereinheit steuerbar ist, sequenziell aktivierbar sind.

Die Wirbelstrombremse ist vorzugsweise als Wirbelstromscheibenbremse ausgestaltet. Die Reibungsbremse ist vorzugsweise als Reibungsscheibenbremse oder Trommelbremse ausgestaltet.

Durch die Verbindung der Wirbelstrombremse und der Reibungsbremse mit einer einzigen Betätigungsvorrichtung gelingt ein einfacher und kompakter Aufbau der Bremsvorrichtung. Die Bremsvorrichtung nimmt wenig Raum in Anspruch und kann vorteilhaft an einem Rad montiert werden.

Vorzugsweise ist die Bremsvorrichtung symmetrisch aufgebaut, sodass auf einer Seite des Rads eine erste Wirbelstrombremse und eine erste Reibungsbremse und auf der anderen Seite des Rads eine zweite Wirbelstrombremse und eine zweite Reibungsbremse realisiert werden kann. Aufgrund des geringen Raumbedarfs können auch mehrere Bremsvorrichtungen auf ein einziges Rad einwirken. Beispielsweise sind zwei Bremsvorrichtungen vorgesehen, die einander bezüglich der Radachse des Rads diametral gegenüber liegen. Mittels der Erfindung kann in diesem Fall die Bremseinwirkung auf das Rad verdoppelt werden.

Der Wirbelstromrotor der Wirbelstrombremse ist vorzugsweise scheibenförmig oder ringförmig ausgebildet und vorzugsweise koaxial mit dem Rad verbunden oder in dieses integriert. Der Wirbelstromrotor kann einteilig oder mehrteilig ausgebildet sein. Beispielsweise liegen zwei vorzugsweise plattenförmige ferromagnetische Metallringe übereinander, von denen der aussen liegende Metallring vorzugsweise besonders resistent gegen äussere Einwirkungen und Korrosion ist und der innere Metallring besonders gut zur Leitung von Wirbelströmen geeignet ist. Der äussere Metallring oder Schutzring wird vorzugsweise entsprechend dünn dimensioniert. Der äussere Metallring besteht vorzugsweise aus Neusilber. Der innere Metallring besteht vorzugsweise aus Stahl. Der Wirbelstromrotor oder wenigstens ein Teil des Wirbelstromrotors, vorzugsweise zumindest dessen nach aussen freiliegende Seite wird vorzugsweise mit einer Schutzschicht beispielsweise aus Metall oder Kunststoff versehen, die vorzugsweise kleiner als 1 mm ist.

In einer bevorzugten Ausgestaltung bildet die ferromagnetische Radscheibe des Rads, welche die Radnabe mit dem Radkranz verbindet, den Wirbelstromrotor. Die Radscheibe wird vorzugsweise entsprechend bearbeitet, gegebenenfalls gehärtet und/oder beschichtet bzw. mit einer Schutzschicht versehen.

Der Wirbelstromstator ist vorzugsweise als Permanentmagnet ausgebildet und/oder umfasst vorzugsweise wenigstens einen Permanentmagneten, gegebenenfalls Haltemagneten, der auf Basis Seltener Erden (Nd-Fe-B, Sm-Co) gefertigt wurde. Vorzugsweise umfasst der Wirbelstromstator einen Körper mit Ausnehmungen, Öffnungen oder Bohrungen, in die Magnete, vorzugsweise Hartmagnete, eingesetzt sind. Die eingesetzten Magnete können zylinderförmig oder quaderförmig ausgebildet sein und/oder einen polygonalen Querschnitt aufweisen.

Ebenso wie der Wirbelstromrotor kann auch der Wirbelstromstator aus einem oder mehreren Teilen bestehen, von denen vorzugsweise wenigstens eines vorzugsweise zumindest an einer frei liegenden Seite beschichtet oder mit einer Schutzschicht versehen ist.

Sofern der Wirbelstromstator und/oder der Wirbelstromrotor aus mehreren Teilen bestehen, so sind diese vorzugsweise miteinander verschraubt. Die Teile können auch durch Montageschrauben miteinander verbunden werden, mittels denen der Wirbelstromstator und/oder der Wirbelstromrotor montiert wird.

In einer vorzugsweisen Ausgestaltung sind wenigstens zwei Teile des Wirbelstromstators derart miteinander verschraubt, dass zwischen diesen ein Teil des Reibungsstators formschlüssig gehalten ist.

Der Wirbelstromstator kann in unterschiedlichen Ausgestaltungen vorliegen, die an das Rad oder Schienenfahrzeug angepasst sind. Beispielsweise ist der Wirbelstromstator als Kreissegment oder als Ringsegment ausgebildet, welches in seinen Abmessungen vorzugsweise an den Wirbelstromrotor angepasst ist und ein Segment davon vorzugsweise selbst dann vollständig überdecken kann, wenn zusätzlich zur Wirbelstrombremse die Reibungsbremse aktiviert wird.

Der Reibungsrotor ist vorzugsweise scheibenförmig oder ringförmig ausgebildet und koaxial mit dem Rad verbunden oder in dieses integriert. Der Reibungsstator kann daher mit dessen Stirnseite oder Frontseite oder mit einer Längsseite auf den Reibungsrotor einwirken.

Der Reibungsstator kann in unterschiedlichen Ausgestaltungen vorliegen, die an das Rad oder Teile des Schienenfahrzeugs angepasst sind. Vorzugsweise ist der Reibungsstator als Kreissegment oder als Ringsegment ausgebildet.

Vorzugsweise sind der Wirbelstromstator und der Reibungsstator als Kreissegmente und/oder als Ringsegmente ausgebildet, die seitlich aneinander anliegend gehalten oder miteinander verbunden sind.

Der Wirbelstromstator und der Reibungsstator werden vorzugsweise während Phasen des Bremsvorgangs positionsfest gehalten, weshalb sie als Statoren bezeichnet werden. Der Wirbelstromstator und der Reibungsstator können jedoch zu einer Bremsposition und wieder zurück zu einer Rückstellposition geführt werden. Der Wirbelstromstator kann in vorzugsweisen Ausgestaltungen zudem auch während des Bremsvorgangs durch die Wirbelstrombremse bewegt werden, beispielsweise um den Reibungsstator gegen den Reibungsrotor zu führen. Bei entsprechender Dimensionierung, welche die Verschiebung des Wirbelstromstators berücksichtigt, wird sichergestellt, dass die Wirkung der Wirbelstrombremse bei der Betätigung der Reibungsbremse unverändert aufrechterhalten bleibt.

In vorzugsweisen Ausgestaltungen sind der Wirbelstromstator und der Reibungsstator starr miteinander verbunden. In dieser Ausgestaltung dient der Wirbelstromstator daher dem Halten und/oder der Montage des Reibungsstators. Beispielsweise wird der Reibungsstator mit dem Wirbelstromstator verschraubt oder durch eine formschlüssige Verbindung miteinander verbunden. Beispielsweise sind der Wirbelstromstator und der Reibungsstator durch eine Schwalbenschwanzverbindung miteinander verbunden, sodass der Reibungsstator in einfacher Weise montiert und vorzugsweise, beispielsweise durch eine Schraubengarnitur, gesichert und auch wieder demontiert und ersetzt werden kann.

In dieser Ausgestaltung verschmelzen die Wirbelstrombremse und die Reibungsbremse praktisch vollständig ineinander, sodass die beschriebenen Vorteile maximal in Erscheinung treten.

In einer weiteren vorzugsweisen Ausgestaltung sind der Wirbelstromstator durch wenigstens eine erste Betätigungsstange und der Reibungsstator durch wenigstens eine zweite Betätigungsstange der einzigen Betätigungsvorrichtung gehalten und durch eine Verbindungsachse drehbar miteinander verbunden. Vorzugsweise sind der Wirbelstromstator und der Reibungsstator je durch zwei Betätigungsstange gehalten. Die Betätigungsstangen des Wirbelstromstators und des Reibungsstators können daher um die Verbindungsachse gegeneinander gedreht werden, sodass der Wirbelstromstator und der Reibungsstator sequenziell aktiviert und gegen den Wirbelstromrotor und den Reibungsrotor geführt werden können.

In vorzugsweisen Ausgestaltungen ist eine Führungsvorrichtung vorgesehen, mittels der der Wirbelstromstator gegen den Wirbelstromrotor und der Reibungsstator gegen den Reibungsrotor geführt werden können. Die Führungsvorrichtung ist vorzugsweise derart ausgebildet, dass diese Vorgänge sequenziell ausgeführt werden können, sodass bei einem Bremsvorgang bei hoher Geschwindigkeit des Fahrzeugs zuerst die Wirbelstrombremse und erst nach einer Geschwindigkeitsreduktion die Reibungsbremse wahlweise aktiviert werden können.

Die Bremsvorrichtung wird vorzugsweise mittels einer Steuereinheit in Abhängigkeit von Betriebsparametern des Schienenfahrzeugs angesteuert. Die Betriebsparameter umfassen vorzugsweise umgebungsabhängige Parameter und fahrzeugabhängige Parameter, beispielsweise auch Schwellwerte, Sollwerte/oder Sollkurven, und Bremsanforderungen, unter Berücksichtigung derer die Steuereinheit Steuersignale an die Bremsvorrichtung überträgt, um die Wirbelstrombremse und die Reibungsbremse sequenziell oder auch gleichzeitig zu betätigen, falls eine sehr starke Bremsung erforderlich ist.

In einer vorzugsweisen Ausgestaltung sind der Wirbelstromstator und der Reibungsstator, die starr miteinander verbunden sind, angetrieben von der Antriebsvorrichtung mittels einer Führungsschiene der Führungsvorrichtung, die eine Steuerkurve aufweist, vor den Wirbelstromrotor und den Reibungsrotor und gemeinsam derart gegen den Wirbelstromrotor und den Reibungsrotor verschiebbar, dass zuerst eine Interaktion zwischen dem Wirbelstromstator und dem Wirbelstromrotor und bei einer weiteren Verschiebung eine Interaktion zwischen dem Reibungsstator und dem Reibungsrotor erfolgt. Mittels der Führungsschiene wird somit vorgesehen, dass der Wirbelstromstator beispielsweise entlang einem senkrecht zur Radachse des Rads verlaufenden ersten Steuerkurvenabschnitt nach vorn in Richtung zur Radachse und anschliessend in einem zweiten geneigten Steuerkurvenabschnitt gegen den Wirbelstromrotor gefahren und getrennt durch einen Luftspalt in einer Ebene vor dem Wirbelstromrotor in einem dritten Steuerkurvenabschnitt verschiebbar gehalten wird. In diesem dritten Steuerkurvenabschnitt, der vorzugsweise wieder senkrecht zur Radachse des Rads verläuft, kann nun der Reibungsstator gegen den Reibungsrotor geführt werden, um die Reibungsbremse zu betätigen. Die Steuerkurve verläuft daher vorzugsweise Z-förmig, wobei die Übergänge zwischen den Steuerkurvenabschnitten vorzugsweise gerundet sind.

Die Aktivierung der Betätigungsvorrichtung zur Verschiebung des Wirbelstromstators und des Reibungsstators erfolgt mittels einer Antriebsvorrichtung, die beispielsweise eine Spindel antreibt oder einen ausfahrtbaren Kolben aufweist. Die Spindel greift beispielsweise in einen Antriebsring ein, der bei einer Drehung der Spindel axial entlang derselben verschoben wird. Alternativ kann der Antriebsring auch mittels des ausfahrbaren Kolbens verschoben werden. Es bestehen daher verschiedene Möglichkeiten zum Antrieb der Betätigungsvorrichtung. Die Antriebsvorrichtung ist beispielsweise ein elektrischer sehr hohen Motor. Gegebenenfalls erfolgt der Antrieb nur in eine Richtung, beispielsweise um den Wirbelstromstator und den Reibungsstator gegen den Wirbelstromrotor und den Reibungsrotor zu verschieben oder vom Wirbelstromrotor und vom Reibungsrotor zu entfernen. Bei diesem Vorgang kann Energie in einem Rückstellelement gespeichert werden, welches den Wirbelstromstator und den Reibungsstator in die umgekehrte Richtung zurückführen kann.

In einer alternativen Ausgestaltung sind der Wirbelstromstator und der Reibungsstator, die durch die wenigstens eine erste Betätigungsstange und die wenigstens eine zweite Betätigungsstange sowie die Verbindungsachse drehbar miteinander verbunden sind, mittels einer Führungsvorrichtung sequenziell gegen den Wirbelstromrotor und den Reibungsrotor drehbar oder schwenkbar. Die Führungsvorrichtung umfasst vorzugsweise eine erste Steuerkurve, die mit der wenigstens einen ersten Betätigungsstange gekoppelt ist, und eine zweite Steuerkurve, die mit der wenigstens einen zweiten Betätigungsstange gekoppelt ist. Durch Betätigung der Führungsvorrichtung können die Wirbelstrombremse und die Reibungsbremse wiederum betätigt werden.

Die Führungsvorrichtung, die mit der ersten und der zweiten Steuerkurve versehen ist, ist vorzugsweise eine runde Metallplatte, die drehbar gelagert ist. Die erste Steuerkurve ist vorzugsweise in den Rand der annähernd radförmigen Führungsvorrichtung eingeprägt, während die zweite Steuerkurve als Führungsbahn oder Führungsschlitz in die Metallplatte eingearbeitet ist. Sofern ein Wirbelstromstator und ein Reibungsstator je auf beiden Seiten des Rads zu betätigen sind, so werden die Steuerkurven doppelt vorgesehen und typischerweise um 180° gegeneinander versetzt. Mit einer Führungsvorrichtung können somit Wirbelstrombremsen und Reibungsbremsen beidseits des Rads betätigt werden. Die Führungsvorrichtung wird daher mit einer Antriebsvorrichtung versehen, die eine Antriebswelle aufweist, mittels der die Führungsvorrichtung gedreht werden kann.

Sofern in den beschriebenen Ausgestaltungen der Erfindung Führungsvorrichtungen mit Steuerkurven vorgesehen sind, welche der beidseitigen Führung eines Führungselement dienen, so werden der Wirbelstromstator und der Reibungsstator mittels der Führungsvorrichtung vor und zurück geführt. Sofern die Steuerkurven hingegen nur der einseitigen Führung eines Führungselements dienen, ist vorzugsweise ein Rückstellelement, beispielsweise eine Rückstellfeder vorgesehen, mittels dessen n die Wirbelstromstatoren und die Reibungsstatoren zurückgeführt werden. Die Bewegung zwischen einer Bremsposition und einer Rückstellposition kann dabei in die eine oder andere Richtung durch die Antriebsvorrichtung oder durch das Rückstellelement erfolgen. Dabei ist es möglich, dass der Wirbelstromstator und der Reibungsstator oder nur der Wirbelstromstator oder der Reibungsstator durch die zugehörige Steuerkurve oder ein zugehöriges Rückstellelement vor oder zurück geführt werden.

Sofern die deaktivierte Bremsvorrichtung keine Bremswirkung entfalten soll, wird vorzugsweise eine Trennscheibe vorgesehen, die zwischen den Wirbelstromstator und den Wirbelstromrotor einführbar ist. Die Trennscheibe ist beispielsweise aus ferromagnetischem Material gefertigt, welches einen Kurzschluss der magnetischen Feldlinien bewirkt und verhindert, dass diese in den Wirbelstromrotor eindringen können.

Die Trennscheibe ist vorzugsweise drehbar, gegebenenfalls koaxial zur Radnabe drehbar, oder vorzugsweise verschiebbar gelagert oder gehalten und mittels eines Trennscheibenantriebs aus einer Trennposition in eine Freigabeposition verschiebbar, in der der Wirbelstromstator und der Wirbelstromrotor ungehindert zusammenwirken können. Der Trennscheibenantrieb, der mittels der Steuereinheit gesteuert wird, kann beliebig ausgestaltet sein und beispielsweise über Zahnräder oder ein weiteres Betätigungselement, beispielsweise eine Pleuelstange auf die Trennscheibe einwirken.

Wie dies beschrieben wurde, kann ein Schienenfahrzeug, gegebenenfalls ein Drehgestell, vorteilhaft mit erfindungsgemässen Bremsvorrichtungen ausgerüstet werden.

Die Räder des Schienenfahrzeugs oder des Drehgestells können auf einer Seite oder auf beiden Seiten mit je einer oder mit mehreren Bremsvorrichtungen ausgerüstet werden.

Nachfolgend wird die Erfindung anhand von Zeichnungen näher erläutert. Dabei zeigt:
- Fig. 1a: eine an einem Rad 9 montierte und noch nicht aktivierte erfindungsgemässe Bremsvorrichtung 1, die eine mit einer Antriebsvorrichtung 8 verbundene Betätigungsvorrichtung 7 aufweist, mittels der, gesteuert von einer Steuereinheit 10, beidseits des Rads 9 je eine Wirbelstrombremse 2A, 2B und je eine Reibungsbremse 3A, 3B betätigbar sind (siehe auch Fig. 1b) ;
- Fig. 1b: in einem Längsschnitt die Bremsvorrichtung 1 von Fig. 1a und eine weitere mit dem Rad 9 verbunden optionale Bremsvorrichtung 1', die vorzugsweise mit einer Betätigungsvorrichtung 7 gemäss Fig. 1a versehen ist;
- Fig. 2a: die Bremsvorrichtung 1 von Fig. 1a mit den aktivierten Wirbelstrombremsen 2A, 2B und den noch nicht aktivierten Reibungsbremsen 3A, 3B (siehe auch Fig. 2b) ;
- Fig. 2b: die Bremsvorrichtung 1 von Fig. 2a in einem Längsschnitt;
- Fig. 3a: die Bremsvorrichtung 1 von Fig. 2a mit den aktivierten Wirbelstrombremsen 2A, 2B und den aktivierten Reibungsbremsen 3A, 3B (siehe auch Fig. 3b);
- Fig. 3b: die Bremsvorrichtung 1 von Fig. 3a in einem Längsschnitt;
- Fig. 4a: eine weitere an einem Rad 9 montierte und noch nicht aktivierte erfindungsgemässe Bremsvorrichtung 1, die eine mit einer Antriebsvorrichtung 8 verbundene Betätigungsvorrichtung 7 aufweist, mittels der, gesteuert von einer Steuereinheit 10, beidseits des Rads 9 je eine Wirbelstrombremse 2A, 2B und je eine Reibungsbremse 3A, 3B gleichzeitig betätigbar sind (siehe auch Fig. 4b);
- Fig. 4b: die Bremsvorrichtung 1 von Fig. 4a von der Frontseite mit einem Vertikalschnitt durch das Rad 9;
- Fig. 5a: die Bremsvorrichtung 1 von Fig. 4a mit den aktivierten Wirbelstrombremsen 2A, 2B und den noch nicht aktivierten Reibungsbremsen 3A, 3B (siehe auch Fig. 5b) ;
- Fig. 5b: die Bremsvorrichtung 1 von Fig. 5a von der Frontseite mit einem Vertikalschnitt durch das Rad 9;
- Fig. 6a: die Bremsvorrichtung 1 von Fig. 4a mit den aktivierten Wirbelstrombremsen 2A, 2B und den aktivierten Reibungsbremsen 3A, 3B (siehe auch Fig. 6b);
- Fig. 6b: die Bremsvorrichtung 1 von Fig. 6a von der Frontseite mit einem Vertikalschnitt durch das Rad 9; und
- Fig. 7: die Bremsvorrichtung 1 von Fig 1a in einer vorzugsweisen Ausgestaltung mit einem Gehäuse 19 und einem Trennelement 20, welches den Wirbelstromstator 21A der Wirbelstrombremse 2A in der Rückstellposition magnetisch abschirmt und vor schädigenden Einwirkungen schützt.

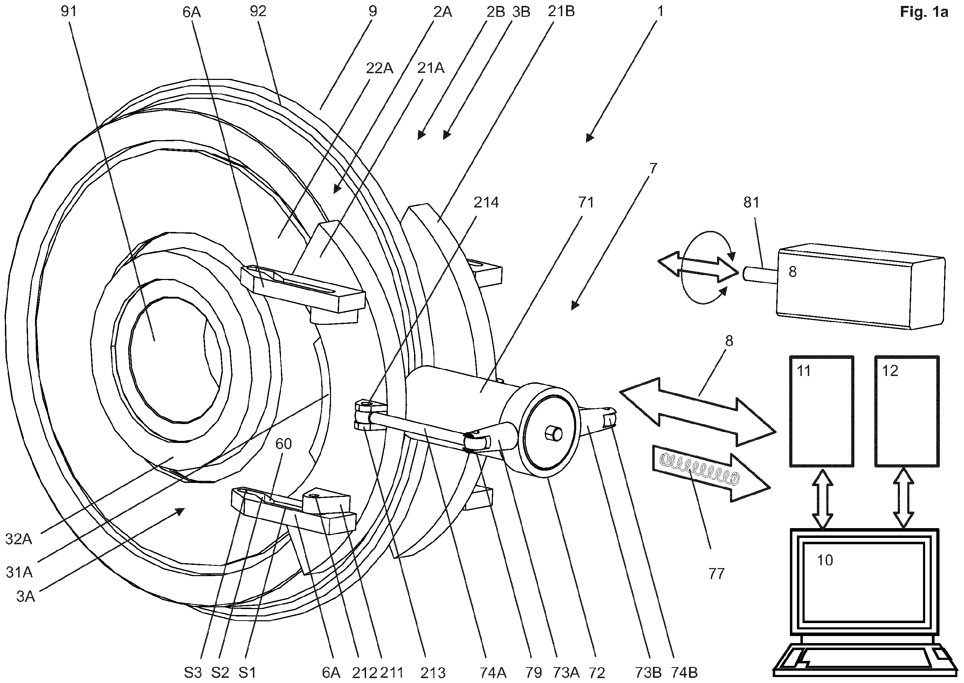

Fig. 1a zeigt eine erfindungsgemässe Bremsvorrichtung 1 in einer ersten vorzugsweisen Ausgestaltung. Die Bremsvorrichtung 1 ist an einem Rad 9 eines Schienenfahrzeugs, beispielsweise an einem Rad 9 eines Drehgestells montiert. Erfindungsgemässe Bremsvorrichtungen 1 sind vorzugsweise an mehreren oder an allen Rädern 9 des Schienenfahrzeugs, beispielsweise eines Personenwagens, eines Güterwagens oder einer Lokomotive vorgesehen.

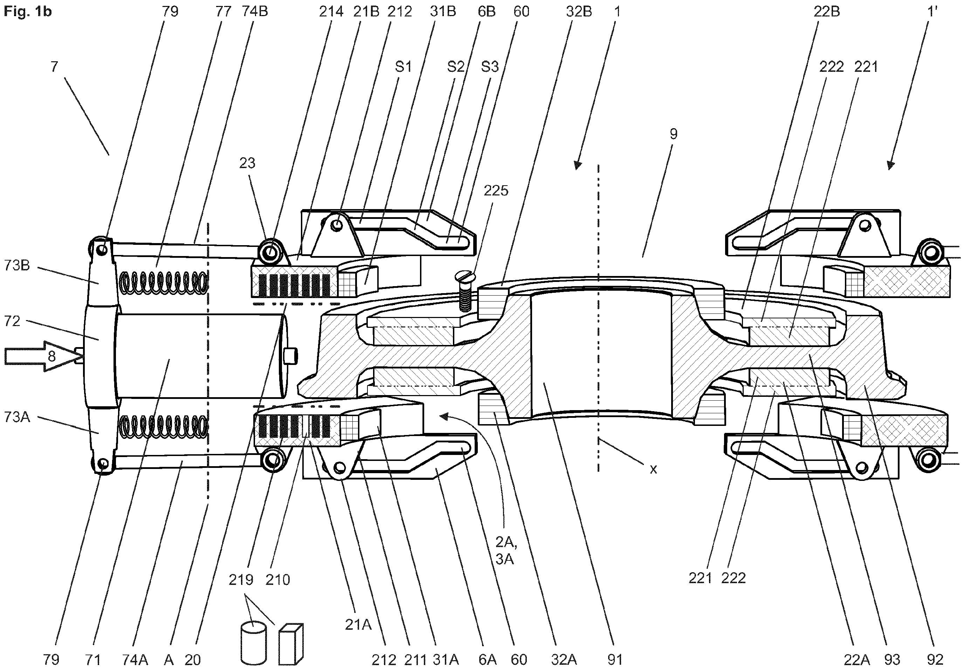

Fig. 1b zeigt die Bremsvorrichtung 1 von Fig. 1a in einem Längsschnitt und eine weitere mit dem Rad 9 verbunden optionale Bremsvorrichtung 1', die vorzugsweise mit einer Betätigungsvorrichtung 7 gemäss Fig. 1a versehen ist. Die beiden Bremsvorrichtungen 1, 1' liegen einander in diesem Ausführungsbeispiel bezüglich der Radachse x diametral gegenüber. Ein Rad 9 kann daher vorteilhaft mit zwei Bremsvorrichtungen 1 ausgerüstet werden, wodurch die Bremswirkung praktisch verdoppelt wird.

Mit der erfindungsgemässen Bremsvorrichtung 1 können beliebige Räder 9 von Schienenfahrzeugen ausgerüstet werden, die ganz oder teilweise aus Metall gefertigt sind. Das Rad 9 des Schienenfahrzeugs, das in Fig. 1b in einer Schnittdarstellung gezeigt ist, weist eine Radnabe 91 auf, die von der Radachse x durchstossen ist und die durch eine Radscheibe 93 mit einem Radkranz 92 verbunden ist.

Die erfindungsgemässe Bremsvorrichtung 1 umfasst auf jeder Seite des Rads 9 je eine Wirbelstrombremse 2A; 2B und je eine Reibungsbremse 3A; 3B, die von einer einzigen mechanischen Betätigungsvorrichtung 7 bedient werden. Wie in Fig. 1b gezeigt, kann wenigstens eine zweite Bremsvorrichtung 1' vorgesehen werden. Die Betätigungsvorrichtung 7 ist mit einer Antriebsvorrichtung 8 verbunden, die von einer Steuereinheit 10 über Steuerelektronik 11 gesteuert wird. Mittels der Steuereinheit 10 können die Wirbelstrombremsen 2A, 2B oder die Wirbelstrombremsen 2A, 2B und die Reibungsbremsen 3A, 3B gemäss vorgegebenen Betriebsparametern aktiviert werden. Bei hohen Geschwindigkeiten erfolgt typischerweise eine Bremsung mittels den Wirbelstrombremsen 2A, 2B und erst bei tiefen Geschwindigkeiten werden typischerweise die Reibungsbremsen 3A, 3B aktiviert. Betriebsparameter werden der Steuereinheit 10 über die Kommunikationseinheit 12 zugeführt und sind gegebenenfalls bereits teilweise innerhalb der Steuereinheit 10 gespeichert. Die Steuerelektronik 11 und die Kommunikationseinheit 12 sind vorzugsweise in die Steuereinheit 10 integriert.

Die Wirbelstrombremsen 2A, 2B der Bremsvorrichtung 1 umfassen je einen Wirbelstromstator 21A; 21B und je einen mit dem Rad 9 verbundenen oder in das Rad 9 integrierten Wirbelstromrotor 22A; 22B, in dem die Wirbelstrombahn ausgebildet wird.

Die vorliegende Bremsvorrichtung 1 umfasst Wirbelstromrotoren 22A, 22B, die als metallene Ringplatten ausgebildet und konzentrisch zur Radachse x auf die Radscheibe 93 aufgesetzt und beispielsweise festgeschraubt sind. Da die Radscheibe 93 selbst aus Metall gefertigt ist, kann auch die Radscheibe 93 als Wirbelstromrotor 22A; 22B dienen und bedarfsweise geformt werden.

Durch unterschiedliche Abstände der Schraffurlinien ist symbolisiert, dass der Wirbelstromrotor oder die Wirbelstromrotoren 22A; 22B auch zwei oder mehrere Rotorteile 221, 222 aufweisen können, die durch Verbindungsmittel, wie Verbindungsschrauben oder Montageschrauben 225, miteinander und/oder mit der Radscheibe 93 verbunden sind. Das direkt an der Radscheibe 93 anliegende Rotorteil 221 besteht vorzugsweise aus hochwertigem ferromagnetischem Stahl. Das aussen am ersten Rotorteil 221 anliegende zweite Rotorteil 222, das mit dem ersten Rotorteil 221 oder vorzugsweise mit der Radscheibe 93 verschraubt ist, besteht vorzugsweise aus einem anderen Metall oder einer Legierung, vorzugsweise aus Neusilber oder Nickel-Silber.

Die Wirbelstromstatoren 21A, 21B, die als Permanentmagneten ausgebildet sind oder Permanentmagneten 219 enthalten, sind von der Betätigungsvorrichtung 7 gehalten und gegen die Wirbelstromrotoren 22A, 22B führbar, um die Wirbelstrombremsen 2A, 2B zu aktivieren, und wieder zurückführbar, um die Wirbelstrombremsen 2A, 2B zu deaktivieren. Die Wirbelstromstatoren 21A, 21B sind als Kreisringsegmente ausgebildet und weisen vorzugsweise einen Durchmesser auf, der etwa der Breite der Platten der Wirbelstromrotoren 22A, 22B entspricht. Nach der Aktivierung der Wirbelstrombremsen 2A, 2B bilden sich während der Fahrt des Schienenfahrzeugs über den gesamten Querschnitt der Wirbelstromstatoren 21A, 21B Wirbelströme aus, welche der Bewegung des Rads 9 entgegenwirken.

In einer vorzugsweisen Ausgestaltung umfassen die Wirbelstromstatoren 21A, 21B eine Vielzahl von Permanentmagneten bzw. Hartmagneten 219, die in Öffnungen, Ausnehmungen oder Bohrungen 210 der Wirbelstromstatoren 21A, 21B angeordnet sind. Sofern die Ausnehmungen 210 als Bohrungen ausgestaltet sind, ist die Montage zylinderförmiger Permanentmagneten 219 besonders einfach. Die Permanentmagneten 219 können in die Bohrungen 210 eingesetzt werden und sind danach durch die von ihnen ausgeübte Magnetkraft selbsttätig gehalten. Die Permanentmagneten 219 können auch eine andere Form aufweisen und beispielsweise als Quader ausgebildet sein.

Die vorzugsweise mit maximaler Dichte eingesetzten Permanentmagneten 219 können gleiche oder unterschiedliche magnetische Ausrichtungen aufweisen, die von Permanentmagnet 219 zu Permanentmagnet 219 um vorzugsweise 90° oder 180° ändert.

In einer vorzugsweisen Ausgestaltung ist ein Halbach-Array vorgesehen, in dem die Permanentmagneten 219 derart angeordnet sind, dass sich der magnetische Fluss auf der einen Seite des Halbach-Array fast aufhebt, auf der anderen Seite, die dem zugehörigen Wirbelstromrotor 22A; 22B zugewandt ist, jedoch verstärkt. Die Magnetisierungsrichtung von benachbarten Permanentmagneten 219 ändert sich jeweils um 90° in Richtung der Längsrichtung oder entlang dem Kurvenverlauf oder Kreisring einer Reihe von Magneten. Die Permanentmagneten 219 benachbarter Linien oder Kreisringe sind vorzugsweise ebenfalls um 90° versetzt. Durch diese alternierende Ausrichtung der Permanentmagneten erfolgt eine gegenseitige Verdrängung der Magnetfelder, sodass die Feldlinien auf einer Seite, vorzugsweise auf der den zugehörigen Wirbelstromrotor 22A; 22B zugewandten Seite mit einer erhöhten magnetischen Flussdichte auftreten.

Die Wirbelstromrotoren 22A, 22B werden vorzugsweise aus Neusilber oder Nickel-Silber oder einer ähnlichen Legierung von Metallen gefertigt. Neusilber ist eine silberweiss glänzende Legierung aus 45%-70% Kupfer, 5%-30% Nickel, 8%-45% Zink, eventuell mit Beimischungen von Spurenelementen wie Blei, Zinn oder Eisen. Neusilber zeichnet sich wegen des Nickelgehalts durch besondere Härte und Korrosionsbeständigkeit aus.

Die Reibungsbremsen 3A, 3B umfassen je einen Reibungsstator 31A; 31B und je einen mit dem Rad 9 verbundenen Reibungsrotor 32A; 32B. Der Reibungsrotor 32A; 32B ist ringförmig ausgebildet und auf die Radnabe 91 des Rads 9 aufgesetzt. Der Reibungsstator 31A; 31B ist formschlüssig und/oder kraftschlüssig an der Frontseite des zugehörigen Wirbelstromstators 21A; 21B befestigt. Vorzugsweise ist der Reibungsstator 31A; 31B durch eine Schwalbenschwanzverbindung formschlüssig mit dem Wirbelstromstator 21A; 21B verbunden.

Bei einer Bewegung der Wirbelstromstatoren 21A, 21B in Richtung zur Radnabe 91 werden Reibungsstatoren 31A, 31B somit mitgeführt, sodass in einem ersten Schritt die Wirbelstrombremsen 2A, 2B und in einem zweiten Schritt, beim Auftreffen der Reibungsstatoren 31A, 31B auf die Reibungsrotoren 32A, 32B die Reibungsbremsen 3A, 3B aktiviert werden.

Die Wirbelstrombremsen 2A, 2B und die Reibungsbremsen 3A, 3B werden somit von derselben Betätigungsvorrichtung 7 betätigt, weshalb nur wenig Raum in Anspruch genommen wird und ein Rad 9 auch vorteilhaft mit zwei Bremsvorrichtungen 1, 1' ausgerüstet werden kann.

Die Betätigungsvorrichtung 7 kann unterschiedlich ausgestaltet sein und umfasst vorzugsweise wenigstens eine Führungsvorrichtung 6A, 6B mittels der die Wirbelstromstatoren 21A, 21B in eine Bremsposition, in der sie mit den Wirbelstromrotoren 22A, 22B interagieren, und zurück in eine Rückstellposition gefahren werden können, in der die Wirbelstromstatoren 21A, 21B von den Wirbelstromrotoren 22A, 22B entkoppelt sind. Dazu weisen die Führungsvorrichtungen 6A, 6B, die als Führungsschienen ausgebildet sind, je eine Steuerkurve 60 auf, in die ein Führungselement 212, das durch einen Führungsflansch 211 mit dem zugehörigen Wirbelstromstator 21A; 21B verbunden ist, hineinragt und das bei einer Verschiebung des Wirbelstromstators 21A; 21B entlang der Steuerkurve 60 verschoben wird. Die Steuerkurve 60 ist in diesem Ausführungsbeispiel zumindest annähernd Z-förmig ausgebildet und weist zwei gerade verlaufende Steuerabschnitte S1, S3 auf, die durch einen schräg verlaufenden Steuerkurvenabschnitt S2 miteinander verbunden sind. Im ersten Steuerkurvenabschnitt S1 werden die Wirbelstromstatoren 21A, 21B parallel zum Rad 9 gegen die Radnabe 91 verschoben. Im zweiten Steuerkurvenabschnitt S2 werden die Wirbelstromstatoren 21A, 21B gegen die Wirbelstromrotoren 22A, 22B verschoben, bis sie nur noch durch einen möglichst schmalen Luftspalt von diesen getrennt sind. Bei der Verschiebung im dritten Steuerkurvenabschnitt S3, während der die Interaktion zwischen den Wirbelstromstatoren 21A, 21B und den Wirbelstromrotoren 22A, 22B aufrechterhalten wird, werden die Reibungsstatoren 31A, 31B gegen die Radnabe 91 und somit gegen die Reibungsrotoren 32A, 32B geführt und die Reibungsbremsen 3A, 3B betätigt.

Die Wirbelstromstatoren 21A, 21B sind durch einen Antriebsflansch 213 und einen Kopplungsbolzen 214 gelenkig mit Antriebsstangen 74A, 74B verbunden, die gelenkig mit Kopplungsarmen 73A, 73B verbunden sind, die von einem Antriebsring 72 gehalten sind. Der Antriebsring 72 ist axial entlang einem Führungskolben oder einer Antriebsspindel 71 verschiebbar und mit einer Antriebsvorrichtung 8 gekoppelt. Bei einer Verschiebung des Antriebsrings 72 werden daher auch die Wirbelstromstatoren 21A, 21B und die Reibungsstatoren 31A, 31B verschoben. Die Antriebsvorrichtung 8 umfasst vorzugsweise einen Elektromotor, vorzugsweise einen sehr hohen Motor.

Die Antriebsvorrichtung 8, die separat dargestellt ist, umfasst ein Antriebselement 81, beispielsweise einen ausfahrbaren Kolben oder eine Antriebswelle. Mittels des Antriebselements 81 wird die Betätigungsvorrichtung 7 betätigt bzw. der Antriebsring 72 verschoben, was auf unterschiedliche Weise erfolgen kann.

Der Antriebsring 72 kann durch den ausfahrbaren Kolben 81 der Antriebsvorrichtung 8 entlang dem Führungskolben 71 verschoben werden. Sofern der Führungskolben 71 als Antriebsspindel ausgebildet ist, kann der Antriebsring 72 durch Drehung der Antriebsspindel 71 verschoben werden. Die Antriebswelle 81 der Antriebsvorrichtung 8 wird daher mit der Antriebsspindel 71 gekoppelt, wonach der Antriebsring 72 durch Betätigung der Antriebsvorrichtung 8 vor und zurück gefahren werden kann. Sofern der Antriebsring 72 hingegen durch den ausfahrbaren Kolben 81 der Antriebsvorrichtung 8 in Richtung zur Radnabe 91 verschoben wird, so wird ein Rückstellelement 77, beispielsweise eine Rückstellfeder, vorgesehen, mittels der der Antriebsring 72 wieder zurückgeführt wird.

Fig. 1b zeigt zwei Rückstellfedern 77, die bei der Verschiebung des Antriebsrings 72 gegen einen Anschlag A komprimiert und geladen werden, sodass sie den Antriebsring 72 zurückführen können, sobald die Antriebsvorrichtung 8 nicht mehr aktiv ist.

Fig. 1b zeigt ferner schematisch Trennelemente 20, welche die Wirbelstromstatoren 21A, 21B in der Rückstellposition abschirmen und/oder schützen. Die Trennelemente 20 können aus Kunststoff, Metall oder einer Kombination davon gefertigt sein.

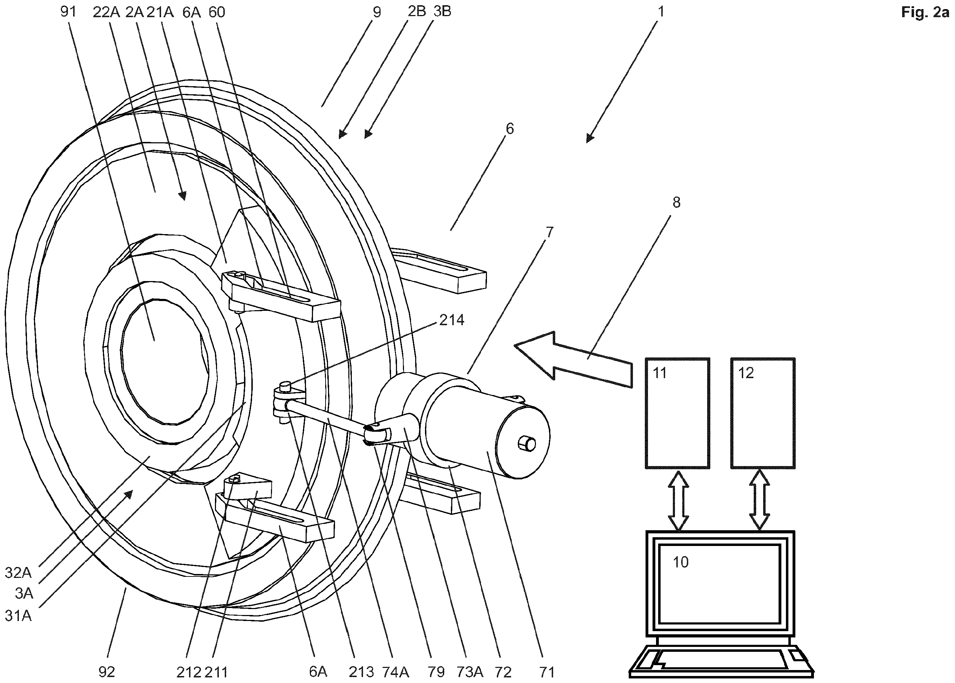

Fig. 2a zeigt die Bremsvorrichtung 1 von Fig. 1a mit den aktivierten Wirbelstrombremsen 2A, 2B und den noch nicht aktivierten Reibungsbremsen 3A, 3B. Der Antriebsring 72 wurde durch die Antriebsvorrichtung 8 nach vorn geschoben, weshalb die Wirbelstromstatoren 21A, 21B und die Reibungsstatoren 31A, 31B entlang den Steuerkurven 60 ebenfalls nach vorn und gegen das Rad 9 geführt wurden.

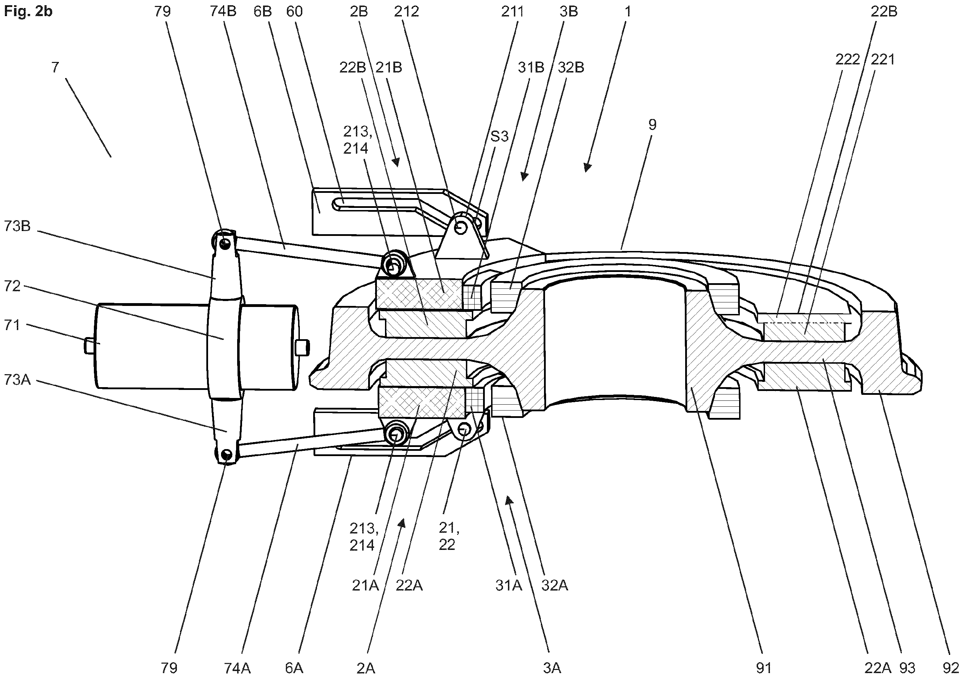

Fig. 2b zeigt die Bremsvorrichtung 1 von Fig. 2a in einem Längsschnitt. Durch Verschiebung der Wirbelstromstatoren 21A, 21B und der Reibungsstatoren 31A, 31B wurde das Führungselement 212 bis zum dritten Steuerkurvenabschnitt S3 vorgeschoben. Dabei wurde der zweite Steuerkurvenabschnitt S2 durchlaufen, wobei die Wirbelstromstatoren 21A, 21B vor die Wirbelstromrotoren 22A, 22B geführt wurden und nur noch durch einen Luftspalt von diesen getrennt sind. Die Reibungsstatoren 31A, 31B der Reibungsbremse 3A, 3B sind noch immer von den Reibungsrotoren 32A, 32B getrennt, sodass die Wirbelstrombremsen 2A, 2B, nicht aber die Reibungsbremsen 3A, 3B aktiv sind.

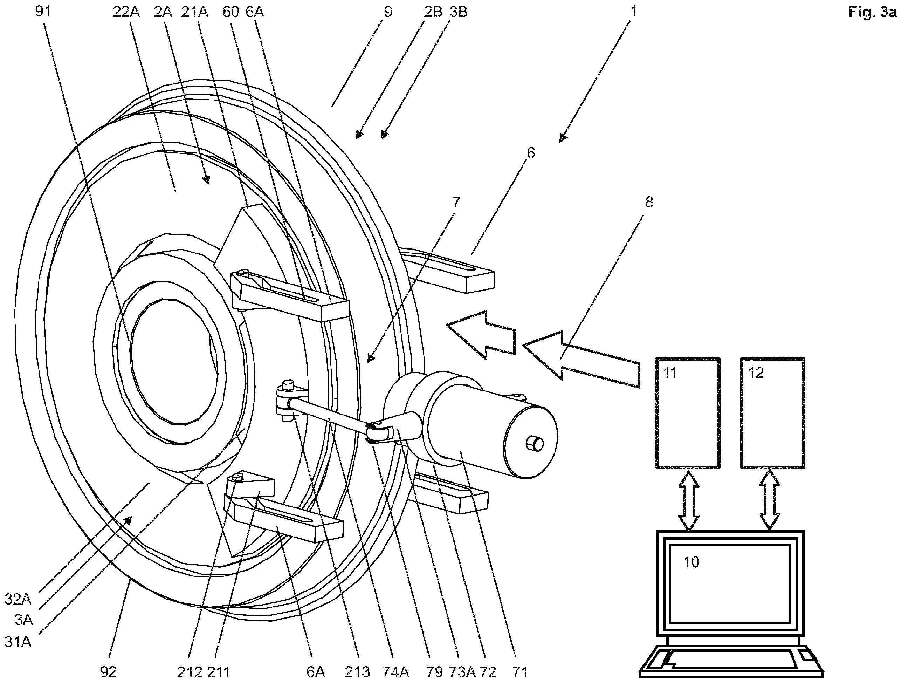

Fig. 3a zeigt die Bremsvorrichtung 1 von Fig. 2a mit den aktivierten Wirbelstrombremsen 2A, 2B und den aktivierten Reibungsbremsen 3A, 3B.

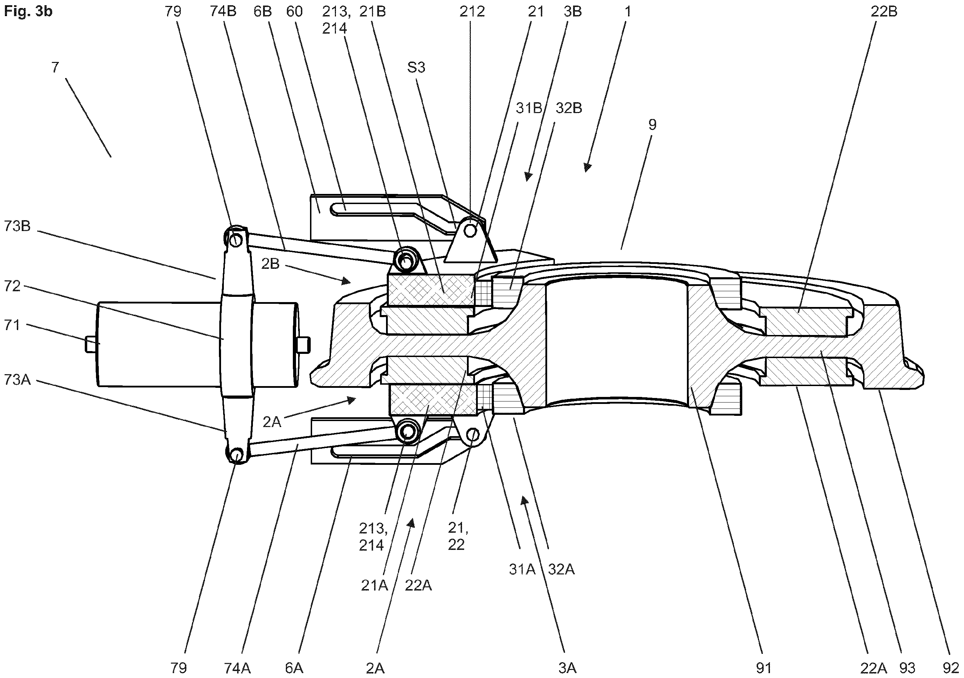

Fig. 3b zeigt die Bremsvorrichtung 1 von Fig. 3a in einem Längsschnitt. Die Wirbelstromstatoren 21A, 21B und die Reibungsstatoren 31A, 31B wurden weiter nach vorn geschoben, sodass die Reibungsstatoren 31A, 31B nun an den Reibungsrotoren 32A, 32B anliegen und die Reibungsbremsen 3A, 3B nun aktiv sind. Der dritte Steuerkurvenabschnitt S3 erlaubt daher die weitere Verschiebung der Wirbelstromstatoren 21A, 21B und der Reibungsstatoren 31A, 31B, um die Reibungsbremsen 3A, 3B zu aktivieren oder deaktivieren, während die Wirbelstrombremsen 2A, 2B unverändert aktiv sind.

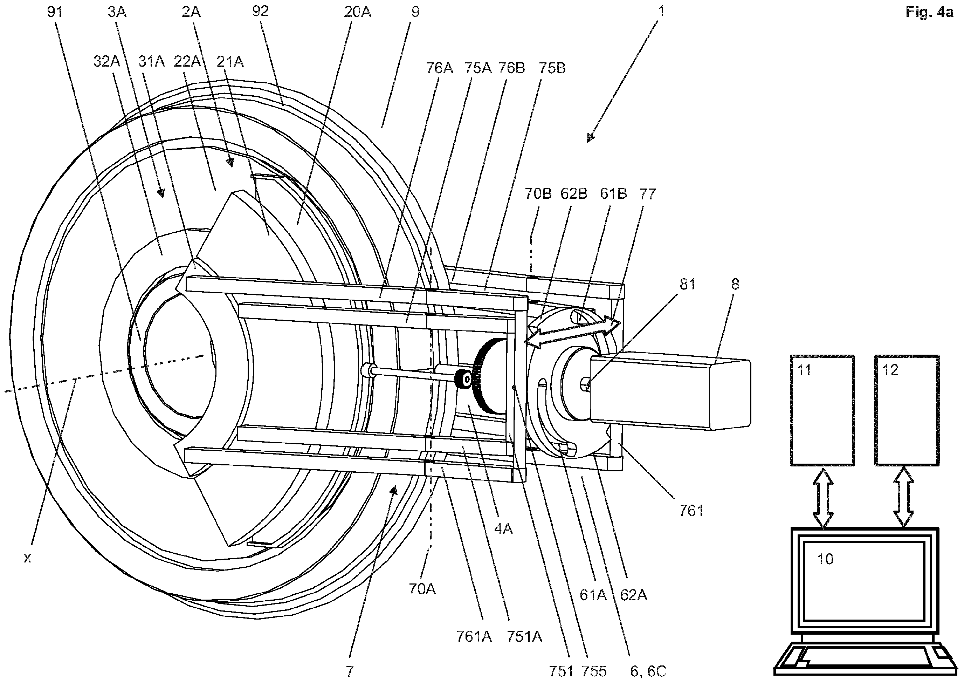

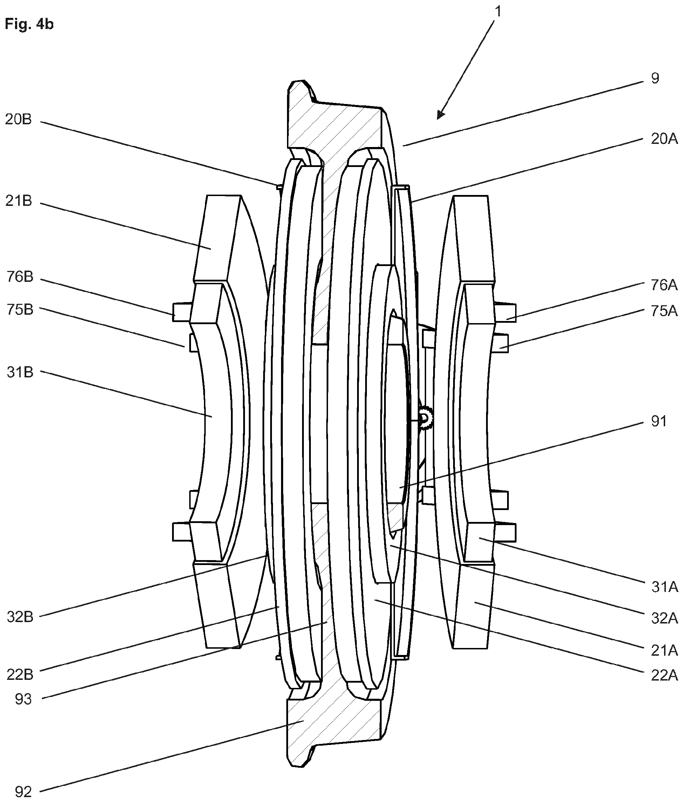

Fig. 4a zeigt eine weitere an einem Rad 9 montierte und noch nicht aktivierte erfindungsgemässe Bremsvorrichtung 1, die eine mit einer Antriebsvorrichtung 8 verbundene Betätigungsvorrichtung 7 aufweist, mittels der, gesteuert von einer Steuereinheit 10, beidseits des Rads 9 je eine Wirbelstrombremse 2A, 2B und je eine Reibungsbremse 3A, 3B gleichzeitig betätigbar ist (siehe auch Fig. 4b).

Fig. 4b zeigt die Bremsvorrichtung 1 von Fig. 4a von der Frontseite mit einem Vertikalschnitt durch das Rad 9.

Mit der erfindungsgemässen Bremsvorrichtung 1 auch in dieser Ausgestaltung können beliebige Räder 9 von Schienenfahrzeugen ausgerüstet werden, die ganz oder teilweise aus Metall gefertigt sind. Das Rad 9 des Schienenfahrzeugs entspricht dem Rad 9 von Fig. 1. Wie in Fig. 1b gezeigt, kann jedes Rad 9 in gleicher Weise mit zwei Bremsvorrichtungen 1 gemäss Fig. 4a ausgerüstet werden.

Auch in dieser Ausgestaltung umfasst die erfindungsgemässe Bremsvorrichtung 1 auf jeder Seite des Rads 9 eine Wirbelstrombremse 2A; 2B und eine Reibungsbremse 3A; 3B, die von einer einzigen mechanischen Betätigungsvorrichtung 7 bedient werden. Die Betätigungsvorrichtung 7 ist mit einer Antriebsvorrichtung 8 verbunden, die von einer Steuereinheit 10 über Steuerelektronik 11 gesteuert wird. Mittels der Steuereinheit 10 können die Wirbelstrombremsen 2A, 2B oder die Wirbelstrombremsen 2A, 2B und die Reibungsbremsen 3A, 3B gemäss vorgegebenen Betriebsparametern aktiviert werden.

Die Wirbelstrombremsen 2A, 2B der Bremsvorrichtung 1 umfassen je einen Wirbelstromstator 21A; 21B und einen mit dem Rad 9 verbundenen oder in das Rad 9 integrierten Wirbelstromrotor 22A; 22B, in dem die Wirbelstrombahn ausgebildet wird. Die Wirbelstromrotoren 22A, 22B entsprechen denen von Fig. 1a. Die Wirbelstromstatoren 21A, 21B, die als Permanentmagneten ausgebildet sind oder, wie oben beschrieben Permanentmagneten bzw. Hartmagneten umfassen können, sind von der Betätigungsvorrichtung 7 gehalten und entsprechen in dieser vorzugsweisen Ausgestaltung den Abmessungen der Wirbelstromstatoren 21A, 21B von Fig. 1a.

Die Reibungsbremsen 3A, 3B umfassen je einen Reibungsstator 31A; 31B und je einen mit dem Rad 9 verbundenen Reibungsrotor 32A; 32B. Die Reibungsrotoren 32A, 32B sind ringförmig ausgebildet und auf die Radnabe 91 des Rads 9 aufgesetzt. Die Reibungsstatoren 31A; 31B sind etwas grösser als die Reibungsstatoren 31A; 31B von Fig. 1a und werden in dieser Ausgestaltung der Bremsvorrichtung 1 nicht stirnseitig, sondern seitlich gegen die Reibungsstatoren 31A; 31B geführt.

In dieser Ausgestaltung sind die Wirbelstromstatoren 21A, 21B je von zwei ersten Betätigungsstangen 75A, 75B der Betätigungsvorrichtung 7 gehalten, die je um eine Verbindungsachse 70A, 70B drehbar oder schwenkbar sind. Die Reibungsstatoren 31A, 31B sind je durch zwei zweite Betätigungsstangen 76A, 76B der Betätigungsvorrichtung 7 gehalten, die um die Verbindungsachse 70A oder 70B drehbar oder schwenkbar sind. Die ersten Betätigungsstangen 75A, 75B weisen von der zugehörigen Verbindungsachse 70A; 70B weiter verlaufende Endstücke 751A auf, die durch ein erstes Ankopplungsteil 751 miteinander verbunden sind. Die zweiten Betätigungsstangen 76A; 76B weisen von der zugehörigen Verbindungsachse 70A; 70B weiter verlaufende Endstücke 761A auf, die durch ein zweites Ankopplungsteil 761 miteinander verbunden sind. Das erste Ankopplungsteil 751 ist zudem mit einem Mitnehmer 755 versehen, der in eine Steuerkurve 61A eingreifen kann.

Die Wirbelstromstatoren 21A, 21B und die Reibungsstatoren 31A, 31B sind durch die ersten Betätigungsstangen 75A, 75B und die zweiten Betätigungsstangen 76A, 76B sowie die zugehörige Verbindungsachse 70A; 70B drehbar miteinander verbunden und wiederum von einer einzigen Betätigungsvorrichtung 7 betätigbar.

In dieser Ausgestaltung liegt keine starre Verbindung zwischen den Wirbelstromstatoren 21A, 21B und dem zugehörigen Reibungsstator 31A; 31B vor. Die Wirbelstromstatoren 21A, 21B werden mittels der ersten Betätigungsstangen 75A; 75B je gegen den zugehörigen Wirbelstromrotor 22A; 22B geschwenkt, um die Wirbelstrombremsen 2A, 2B zu betätigen. Die Reibungsstatoren 31A, 31B werden mittels der zweiten Betätigungsstangen 76A; 76B je gegen den zugehörigen Reibungsrotor 32A; 32B geschwenkt, um die Reibungsbremse 3A, 3B zu betätigen. Die Betätigung der Wirbelstrombremsen 2A, 2B und der Reibungsbremsen 3A, 3B erfolgt wie bei der Bremsvorrichtung 1 von Fig. 1a wiederum sequenziell und in derselben Reihenfolge. Die Steuerung erfolgt, wie mit Bezug zu Fig. 1a beschrieben mit der Steuereinheit 10.

Zur Betätigung der Wirbelstromstatoren 21A, 21B und der Reibungsstatoren 31A, 31B beidseits des Rads 9 ist wiederum eine Führungsvorrichtung 6C vorgesehen, mittels der die Wirbelstromstatoren 21A, 21B gegen die Wirbelstromrotor 22A, 22B und die Reibungsstatoren 31A, 31B gegen die Reibungsrotoren 32A, 32B führbar sind.

Die Führungsvorrichtung 6C, die als gerundete Metallplatte ausgebildet ist, umfasst erste Steuerkurven 61A, 61B und zweite Steuerkurven 62A, 62B. Die ersten Steuerkurven 61A, 61B sind als Führungsschlitze ausgebildet, die in die Metallplatte eingelassen sind. Die zweiten Steuerkurven 62A, 62B sind in den Rand der Metallplatte eingearbeitet. Die ersten und zweiten Steuerkurven 61A, 61B; 62A, 62B verlaufen im Gegenuhrzeigersinn von innen nach aussen, weshalb anliegende oder eingreifende Führungselemente der ersten Betätigungsstangen 75A, 75B und der zweiten Betätigungsstangen 76A, 76B bei einer Drehung der Führungsvorrichtung 6C im Uhrzeigersinn nach aussen verschoben und die Wirbelstromstatoren 21A, 21B und die Reibungsstatoren 31A, 31B gegen das Rad 9 geschwenkt werden. Die ersten und zweiten Steuerkurven 61A, 61B; 62A, 62B sind dabei derart gegeneinander verschoben, dass jeweils zuerst die Wirbelstromstatoren 21A, 21B eingeschwenkt werden, um die Wirbelstrombremsen 2A, 2B zu betätigen und erst bei einer weiteren Drehung der Führungsvorrichtung 6C die Reibungsstatoren 31A, 31B geschwenkt werden, um die Reibungsbremse 3A, 3B zu betätigen. Sobald die Führungsvorrichtung 6C wieder zurückgedreht gedreht wird, werden die ersten Betätigungsstangen 75A, 75B und der zweiten Betätigungsstangen 76A, 76B wieder freigegeben. Damit sich zuerst die Reibungsstatoren 31A, 31B von den Reibungsrotoren 32A, 32B lösen können, sind die ersten Betätigungsstangen 75A, 75B durch ein Rückstellelement 77 miteinander verbunden. Die zweiten Betätigungsstangen 76A, 76B werden hingegen durch die ersten Steuerkurven 61A, 61B zurückgeführt, die der beidseitigen Führung des Mitnehmers 755 dienen.

Jede der ersten Steuerkurven 61A, 61B ist mit den ersten Betätigungsstangen 75A, 75B auf der einen oder anderen Seite des Rads 9 gekoppelt. Jede der zweiten Steuerkurven 62A, 62B, ist mit den zweiten Betätigungsstangen 76A, 76B auf der einen oder anderen Seite des Rads 9 gekoppelt. Die Kopplung erfolgt durch die Ankopplungsteile 751, 761 der ersten und zweiten Betätigungsstangen 75A, 75B; 76A, 76B bzw. durch den Mitnehmer 755, der mit dem ersten Ankopplungsteil 751 verbunden ist.

Die Mitnehmer 755 der ersten Betätigungsstangen 75A, 75B greifen in die zugehörige erste Steuerkurve 61A; 61B der Führungsvorrichtung 6C ein und werden beidseitig geführt, weshalb auf ein Rückstellelement verzichtet werden kann.

Die Antriebsvorrichtung 8 weist in dieser Ausgestaltung daher eine Antriebswelle 81 auf, welche die Führungsvorrichtung 6C vor und vorzugsweise auch wieder zurückdrehen kann.

In Fig. 4a ist ferner exemplarisch eine Trennplatte 20A gezeigt, die mittels eines Trennplattenantriebs 4A in eine Position zwischen dem Wirbelstromstator 21A und dem Wirbelstromrotor 22A gedreht werden kann. Die Trennplatte 20A ist vorzugsweise konzentrisch zur Radachse x drehbar gehalten und beispielsweise mittels eines Zahnradantriebs oder einer Pleuelstange des Trennplattenantriebs 4A in eine Freigabeposition drehbar und von der Wirbelstrombremse 2A entfernt. Die Steuerung des Trennplattenantriebs 4A erfolgt wiederum durch die Steuereinheit 10.

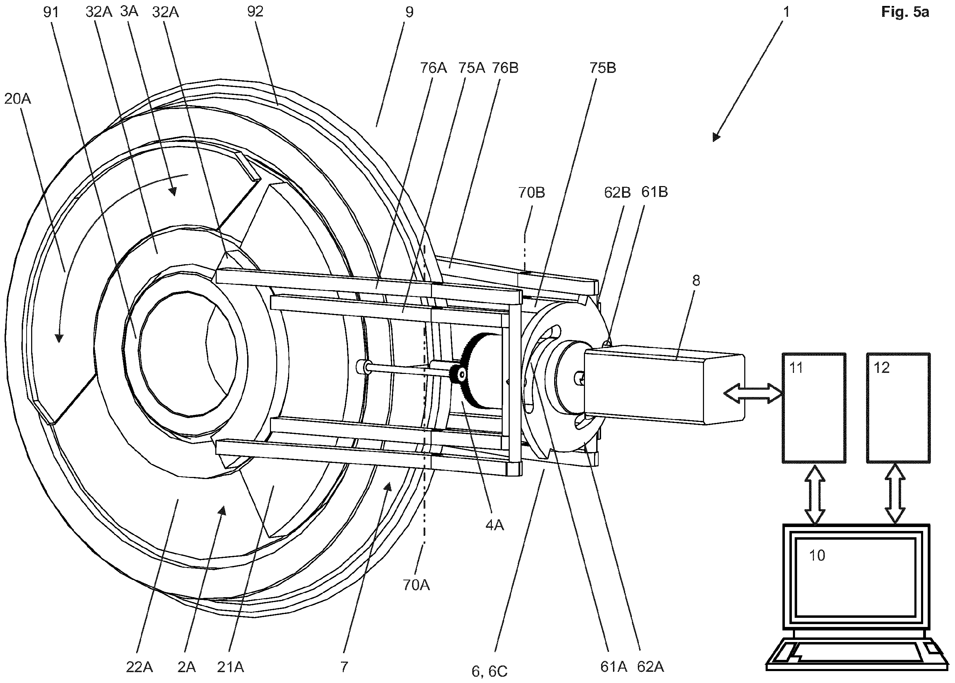

Fig. 5a zeigt die Bremsvorrichtung 1 von Fig. 4a mit den aktivierten Wirbelstrombremsen 2A, 2B und den noch nicht aktivierten Reibungsbremsen 3A, 3B. Die beidseits optional vorgesehenen Trennplatte 20A wurde weggedreht, sodass die Wirbelstromstatoren 21A, 21B durch Betätigung der Führungsvorrichtung 6C gegen die Wirbelstromrotoren 22A, 22B geschwenkt werden konnten. Die Reibungsrotoren 31A, 31B sind hingegen noch immer ausgeschwenkt, weshalb nur die Wirbelstrombremsen 2A, 2B aktiv sind.

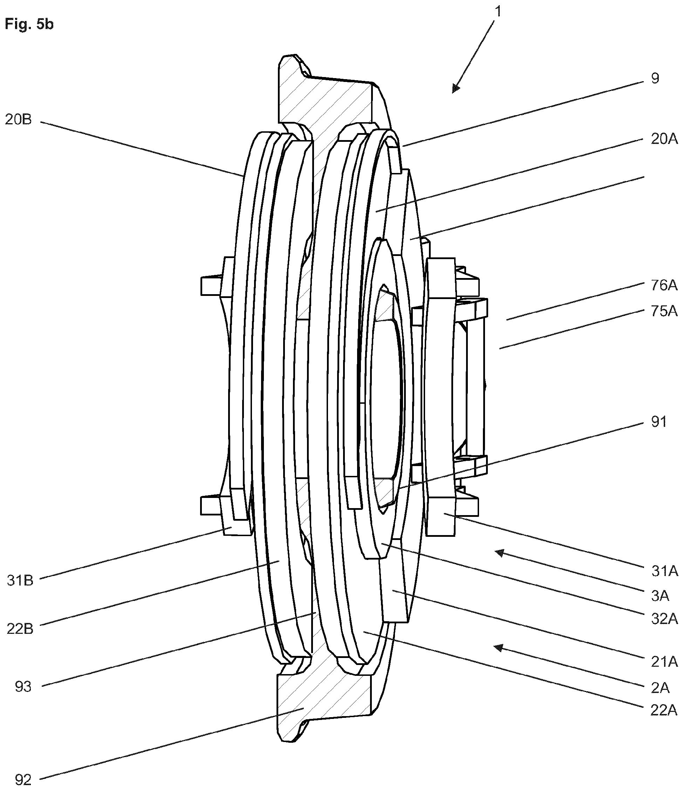

Fig. 5b zeigt die Bremsvorrichtung 1 von Fig. 5a von der Frontseite mit einem Vertikalschnitt durch das Rad 9.

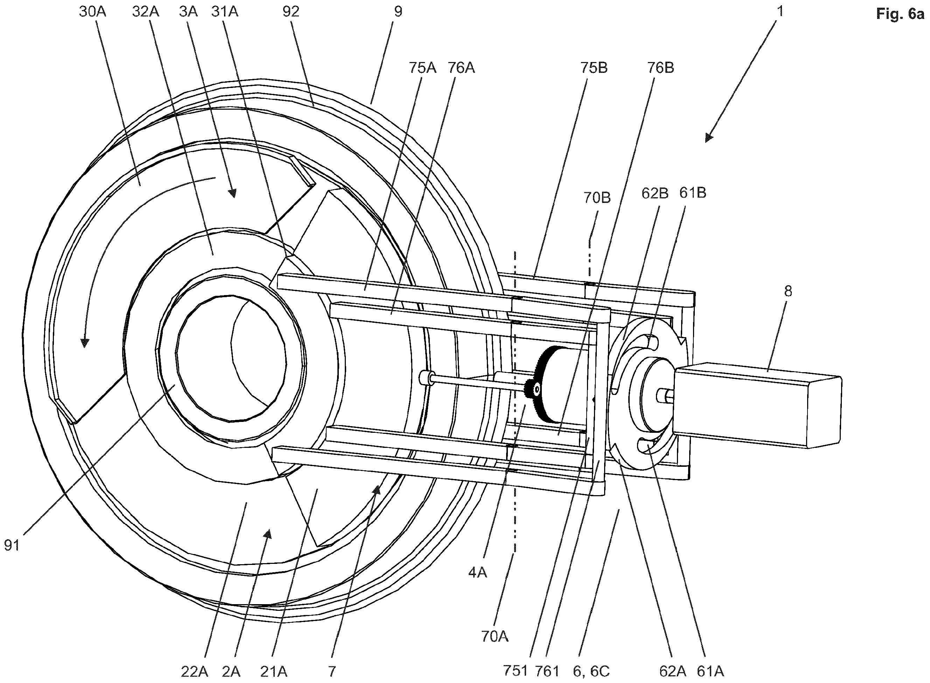

Fig. 6a zeigt die Bremsvorrichtung 1 von Fig. 5a mit den aktivierten Wirbelstrombremsen 2A, 2B und den aktivierten Reibungsbremsen 3A, 3B. Durch eine weitere Drehung der Führungsvorrichtung 6C wurde nun auch die Reibungsstatoren 31A, 31B gegen die Reibungsrotoren 32A, 32B geführt, um die Reibungsbremsen 3A, 3B zu aktivieren.

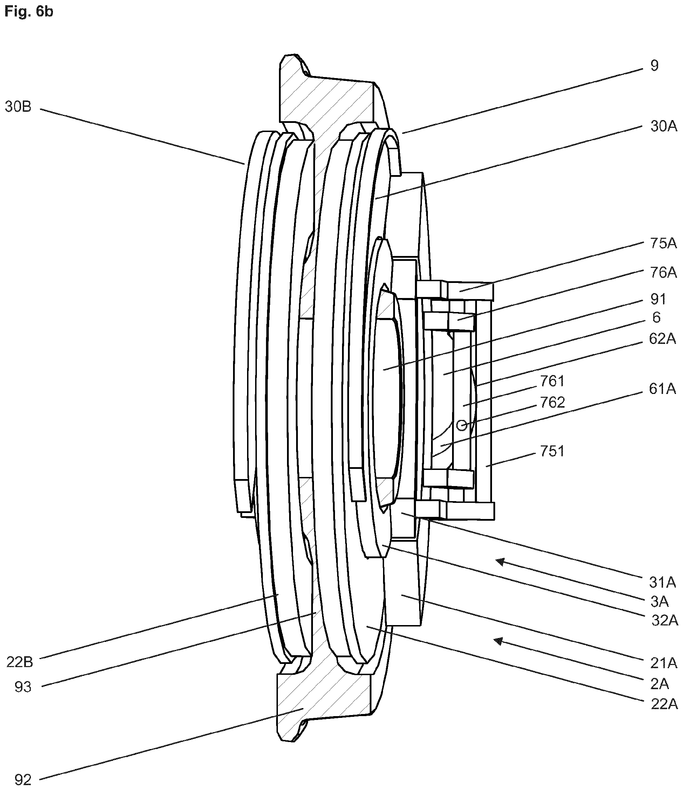

Fig. 6b zeigt die Bremsvorrichtung 1 von Fig. 5a von der Frontseite mit einem Vertikalschnitt durch das Rad 9.

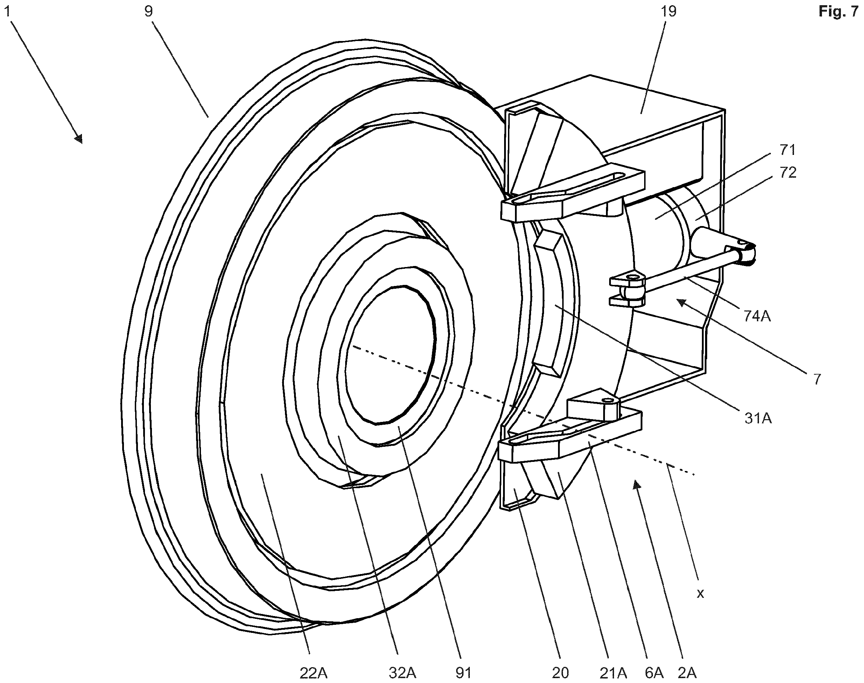

Fig. 7 zeigt die Bremsvorrichtung 1 von Fig 1 in einer vorzugsweisen Ausgestaltung mit einem Gehäuse 19 und einem Trennelement 20, welches den Wirbelstromstator 21A der Wirbelstrombremse 2A in der Rückstellposition magnetisch abschirmt und vor schädigenden Einwirkungen schützt. Die Wirbelstrombremse 2A und die Reibungsbremse 3A sind inaktiv. Der Wirbelstromstator 21A befindet sich in der Rückstellposition vorzugsweise dicht anliegend an plattenförmigen Trennelement 20, welches die dem Wirbelstromrotor 22A zugewandte Seite des Wirbelstromstators 21A abdeckt und vor der Einwirkung von Feststoffpartikeln und Flüssigkeiten schützt.

Vorzugsweise umfasst das Trennelement 20 oder das Gehäuse 19 wenigstens eine Bürste, welche den Wirbelstromstator 21A beim Ausfahren und/oder Einfahren reinigt.

Die Betätigungsvorrichtung 7 ist innerhalb des Gehäuses 19 angeordnet und ebenfalls vor störenden Einwirkungen geschützt.

### Bezugszeichenliste

- 1: Bremsvorrichtung
- 10: Steuereinheit
- 11: Antriebsmodul
- 12: Kommunikationseinheit
- 19: Gehäuse
- 2A; 2B: Wirbelstrombremse
- 20A; 20B: Trennscheibe
- 21A; 21B: Wirbelstromstator
- 210: Bohrung
- 211: Führungsflansch
- 212: Führungselement
- 213: Antriebsflansch
- 214: Kopplungsbolzen
- 219: Magnet
- 22A; 22B: Wirbelstromrotor
- 221: erstes Rotorteil, z.B. Stahlring
- 222: zweites Rotorteil, z.B. Neusilberring
- 225: Verbindungsschrauben, Montageschrauben
- 3A; 3B: Reibungsbremse
- 31A; 31B: Reibungsstator
- 32A; 32B: Reibungsrotor
- 4: Trennscheibenantrieb
- 6: Führungsvorrichtung
- 6A; 6B: Führungsschienen
- 6C: Führungsplatte
- 60, 60A; 60B: Steuerkurve
- 61A; 61B: erste Steuerkurve
- 62A; 62B: zweite Steuerkurve
- 7: Verschiebevorrichtung
- 70A; 70B: Verbindungsachse
- 71: Führungskolben, Antriebsspindel
- 72: Antriebsring
- 73A; 73B: Kopplungsarme
- 74A; 74B: Antriebsstangen
- 75A; 75B: erste Betätigungsstange
- 751: erstes Ankopplungsteil
- 755: Mitnehmer
- 751A; 751B: Endstück der ersten Betätigungsstange
- 76A; 76B: zweite Betätigungsstange
- 761: zweites Ankopplungsteil
- 761A; 761B: Endstück der zweiten Betätigungsstange
- 77: Rückstellelement, Rückstellfeder
- 79: Kopplungsbolzen
- 8: Antriebsvorrichtung
- 81: Antriebselement, Kolben, Antriebswelle
- 9: Rad
- 91: Radnabe
- 92: Radkranz
- 93: Radscheibe

## Patentansprüche

1. Bremsvorrichtung (1) für ein Rad (9) eines Schienenfahrzeugs mit wenigstens einer Wirbelstrombremse (2A; 2B), die einen einteiligen oder mehrteiligen Wirbelstromstator (21A; 21B), der als Permanentmagnet ausgebildet ist oder wenigstens einen Permanentmagnet (219) umfasst, und einen mit dem Rad (9) verbundenen einteiligen oder mehrteiligen Wirbelstromrotor (22A; 22B) umfasst, die mittels einer mechanischen Betätigungsvorrichtung gegeneinander führbar sind, und mit wenigstens einer Reibungsbremse (3A; 3B), die einen Reibungsstator (31A; 31B) und einen mit dem Rad (9) verbundenen Reibungsrotor (32A; 32B) umfasst, die mittels einer mechanischen Betätigungsvorrichtung gegeneinander führbar sind, **dadurch gekennzeichnet, dass** die Wirbelstrombremse (2A; 2B) und die Reibungsbremse (3A; 3B) von einer einzigen Betätigungsvorrichtung (7) und einer damit gekoppelten Antriebsvorrichtung (8), die mittels einer Steuereinheit (10) steuerbar ist, sequenziell aktivierbar sind.

2. Bremsvorrichtung (1) nach Anspruch 1, **dadurch gekennzeichnet, dass** eine erste Wirbelstrombremse (2A) und eine erste Reibungsbremse (3A) auf einer ersten Seite des Rads (9) und eine zweite Wirbelstrombremse (2B) und eine zweite Reibungsbremse (3B) auf einer zweiten Seite des Rads (9) angeordnet sind und dass die erste Wirbelstrombremse (2A) und die erste Reibungsbremse (3A) sowie die zweite Wirbelstrombremse (2B) und die zweite Reibungsbremse (3B) je von einer Betätigungsvorrichtung (7) oder von der einzigen Betätigungsvorrichtung (7) aktivierbar sind.

3. Bremsvorrichtung (1) nach Anspruch 1 oder 2, **dadurch gekennzeichnet,**
a) **dass** der einteilige oder mehrteilige Wirbelstromrotor (22A; 22B) scheibenförmig oder ringförmig ausgebildet ist und koaxial mit dem Rad (9) verbunden oder in dieses integriert ist; und/oder
b) **dass** der Reibungsrotor (32A; 32B) scheibenförmig oder ringförmig ausgebildet ist und koaxial mit dem Rad (9) verbunden oder in dieses integriert ist.

4. Bremsvorrichtung (1) nach Anspruch 1, 2 oder 3, **dadurch gekennzeichnet,**
a) **dass** der Wirbelstromstator (21A; 21B) und der Reibungsstator (31A; 31B) starr miteinander verbunden sind, oder
b) **dass** der Wirbelstromstator (21A; 21B) durch wenigstens eine erste Betätigungsstange (75A; 75B) und der Reibungsstator (31A; 31B) durch wenigstens eine zweite Betätigungsstange (76A; 76B) der einzigen Betätigungsvorrichtung (7) gehalten und durch eine Verbindungsachse (70A; 70B) drehbar miteinander verbunden sind.

5. Bremsvorrichtung (1) nach einem der Ansprüche 1 - 4,
**dadurch gekennzeichnet,**
a) **dass** der Wirbelstromstator (21A; 21B) ein Permanentmagnet ist oder dass der Wirbelstromstator (21A; 21B) vorzugsweise zylinderförmige oder quaderförmige Permanentmagneten (219) umfasst, die in Ausnehmungen, Öffnungen oder Bohrungen (210) angeordnet sind, und/oder
b) **dass** der einteilige Wirbelstromrotor (22A; 22B) aus Stahl oder einer Legierung, vorzugsweise Neusilber, besteht, die Kupfer, Nickel, und/oder Zink umfasst, und dass der einteilige Wirbelstromrotor (22A; 22B) vorzugsweise mit einer Schutzschicht versehen ist; und/oder
c) **dass** der mehrteilige Wirbelstromrotor (22A; 22B) ein dem zugehörigen Rad (9) zugewandtes erstes Rotorteil (221) aus ferromagnetischem Metall, vorzugsweise Stahl, und ein aussen liegendes zweites Rotorteil (222) aus Metall oder einer Legierung, vorzugsweise Neusilber, besteht, die Kupfer, Nickel, und/oder Zink umfasst, und dass wenigstens eines der Rotorteile (221, 222) vorzugsweise mit einer Schutzschicht versehen ist.

6. Bremsvorrichtung (1) nach einem der Ansprüche 1 - 5, **dadurch gekennzeichnet, dass** eine Führungsvorrichtung (6; 6A; 6B; 6C) vorgesehen ist, mittels der der Wirbelstromstator (21A; 21B) gegen den Wirbelstromrotor (22A; 22B) und der Reibungsstator (31A; 31B) gegen den Reibungsrotor (32A; 32B) führbar ist.

7. Bremsvorrichtung (1) nach Anspruch 6, **dadurch gekennzeichnet,**
a) **dass** der Wirbelstromstator (21A; 21B) und der Reibungsstator (31A; 31B), die starr miteinander verbunden sind, angetrieben von der Antriebsvorrichtung (8) mittels einer Führungsschiene (6A; 6B) der Führungsvorrichtung (6), die eine Steuerkurve (60) aufweist, vor den Wirbelstromrotor (22A; 22B) und den Reibungsrotor (32A; 32B) und gemeinsam derart gegen den Wirbelstromrotor (22A; 22B) und den Reibungsrotor (32A; 32B) verschiebbar sind, dass zuerst eine Interaktion zwischen dem Wirbelstromstator (21A; 21B) und dem Wirbelstromrotor (22A; 22B) und bei einer weiteren Verschiebung eine Interaktion zwischen dem Reibungsstator (31A; 31B) und dem Reibungsrotor (32A; 32B) erfolgt; oder
b) **dass** der Wirbelstromstator (21A; 21B) und der Reibungsstator (31A; 31B), die durch die wenigstens eine erste Betätigungsstange (75A; 75B) und die wenigstens eine zweite Betätigungsstange (76A; 76B) sowie die Verbindungsachse (70A; 70B) drehbar miteinander verbunden sind, angetrieben von der Antriebsvorrichtung (8) mittels einer Führungsvorrichtung (6C) sequenziell gegen den Wirbelstromrotor (22A; 22B) und den Reibungsrotor (32A; 32B) drehbar sind, wobei die Führungsvorrichtung (6C) eine erste Steuerkurve (61A; 61B), die mit der wenigstens einen ersten Betätigungsstange (75A; 75B) gekoppelt ist, und eine zweite Steuerkurve (62A; 62B), die mit der wenigstens einen zweiten Betätigungsstange (76A; 76B) gekoppelt ist, umfasst.

8. Bremsvorrichtung (1) nach Anspruch 6 oder 7, **dadurch gekennzeichnet, dass** die Führungsvorrichtung (6C), die mit der ersten Steuerkurve (61A; 61B) und der zweiten Steuerkurve (62A; 62B) versehen ist, eine runde Metallplatte ist, die drehbar gelagert ist.

9. Bremsvorrichtung (1) nach einem der Ansprüche 1 - 8, **dadurch gekennzeichnet,**
a) **dass** die Antriebsvorrichtung (8) ein Antriebselement (81) aufweist, welches linear ausfahrbar ist, um ein Element (72) der Betätigungsvorrichtung (7) ebenfalls entlang einem Führungskolben (71) zu verschieben, oder
b) **dass** die Antriebsvorrichtung (8) ein Antriebselement (81) aufweist, welches drehbar ist, um eine Antriebsspindel (71) zu drehen, entlang der ein Element (72) der Betätigungsvorrichtung (7) verschiebbar ist; oder
c) **dass** die Antriebsvorrichtung (8) ein Antriebselement (81) aufweist, welches drehbar ist, um die Führungsvorrichtung (6C), die mit der ersten Steuerkurve (61A; 61B) und der zweiten Steuerkurve (62A; 62B) versehen ist, zu drehen.

10. Bremsvorrichtung (1) nach einem der Ansprüche 1-9, **dadurch gekennzeichnet,**
**dass** wenigstens ein Rückstellelement, wie eine Rückstellfeder (77), vorgesehen ist, mittels dessen der Wirbelstromstator (21A; 21B) aus einer Position, in der er mit dem Wirbelstromstator (22A; 22B) zusammenwirkt, wieder in eine Ausgangsposition rückführbar ist, und/oder
**dass** wenigstens ein Rückstellelement, wie eine Rückstellfeder (77), vorgesehen ist, mittels dessen der Reibungsstator (31A; 31B) aus einer Position, in der er mit dem Wirbelstromstator (22A; 22B) zusammenwirkt, wieder in eine Ausgangsposition rückführbar ist.

11. Bremsvorrichtung (1) nach einem der Ansprüche 1-10, **dadurch gekennzeichnet, dass** der Wirbelstromstator (21A; 21B) und der Reibungsstator (31A; 31B) als Kreissegmente oder als Ringsegmente ausgebildet sind, die seitlich aneinander liegen oder seitlich voneinander beabstandet sind.

12. Bremsvorrichtung (1) nach einem der Ansprüche 1-11, **dadurch gekennzeichnet, dass** der Wirbelstromrotor (22A; 22B) durch die zwischen der Radnabe (91) und dem Radkranz (92) des Rads (9) liegende Radscheibe (93) gebildet wird oder eine an der Radscheibe (93) anliegende Ringscheibe ist, und dass der Reibungsstator (31A; 31B) als Ringscheibe an der Radscheibe (93) anliegt oder als Ring die Radnabe (91) umschliesst.

13. Bremsvorrichtung (1) nach einem der Ansprüche 1-12, **dadurch gekennzeichnet, dass** eine Trennscheibe (20A; 20B) vorgesehen ist, die zwischen den Wirbelstromstator (21A; 21B) und den Wirbelstromrotor (22A; 22B) einführbar ist und mittels der die Dichte der Magnetfeldlinien, die zwischen dem Wirbelstromstator (21A; 21B) und dem Wirbelstromrotor (22A; 22B) verlaufen, reduziert wird.

14. Bremsvorrichtung (1) nach einem der Ansprüche 1-12, **dadurch gekennzeichnet, dass** die Trennscheibe (20A; 20B) drehbar, gegebenenfalls drehbar koaxial zur Radnabe (91) oder verschiebbar gelagert oder gehalten und mittels eines Trennscheibenantriebs (4A) aus der Trennposition in eine Freigabeposition verschiebbar ist, in der der Wirbelstromstator (21A; 21B) und der Wirbelstromrotor (22A; 22B) ungehindert zusammenwirken können.

15. Schienenfahrzeug, insbesondere Drehgestell, mit Rädern (9),
a) von denen wenigstens ein Rad (9) auf einer Seite oder auf beiden Seiten mit je einer Bremsvorrichtung (1) gemäss einem der Ansprüche 1 - 14 ausgerüstet ist; und/oder
b) von denen wenigstens ein Rad (9) auf einer Seite oder auf beiden Seiten mit je zwei Bremsvorrichtungen (1) gemäss einem der Ansprüche 1 - 14 ausgerüstet ist, die einander vorzugsweise diametral gegenüber liegen.
